(19) Europäisches Patentamt
European Patent Office
Office européen des brevets

(11) EP 2 452 959 B1

# (12) EUROPEAN PATENT SPECIFICATION

(45) Date of publication and mention of the grant of the patent:
**21.01.2015 Bulletin 2015/04**

(21) Application number: **10190996.8**

(22) Date of filing: **12.11.2010**

(51) Int Cl.:
***C08F 210/06*** *(2006.01)*
***C08F 2/00*** *(2006.01)*
***C08F 4/646*** *(2006.01)*
***C08L 23/14*** *(2006.01)*
*C08F 4/649* *(2006.01)*

## (54) Process for producing propylene random copolymers and their use

Verfahren zur Herstellung von statistischen Propylencopolymeren und deren Verwendung

Procédé pour la production de copolymères aléatoires de propylène et leurs utilisations

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.05.2012 Bulletin 2012/20**

(73) Proprietor: **Borealis AG**
**1220 Vienna (AT)**

(72) Inventors:
- **Paavilainen, Juha**
**00510, Helsinki (FI)**
- **Leskinen, Pauli**
**00700, Helsinki (FI)**

(74) Representative: **Lux, Berthold et al**
**Maiwald Patentanwalts GmbH**
**Elisenhof**
**Elisenstraße 3**
**80335 München (DE)**

(56) References cited:
**EP-A1- 1 783 145**
**WO-A1-2009/153213**
**WO-A2-2008/015113**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 452 959 B1

## Description

The present invention is related to an improved two-stage process for preparing propylene random copolymers, which are suitable as matrix for soft heterophasic propylene copolymers, said process being characterized by an improved hydrogen and simultaneously comonomer, like ethylene, response.

There are essentially two different kinds of heterophasic propylene copolymers known in the art: a) heterophasic copolymers comprising a propylene random copolymer as matrix (RAHECO) and b) heterophasic copolymers having a propylene homopolymer as matrix phase. RAHECOs are mainly used for soft fibres and soft films.

The heterophasic propylene copolymers further have in addition to the matrix phase an elastomeric phase which is dispersively distributed in the matrix. The elastomeric phase contains a propylene copolymer rubber, like ethylene propylene rubber (EPR). The rubber component is thus a copolymer of propylene and a further alpha-olefin, like ethylene and is mainly in amorphous (= xylene cold soluble, XCS) form.

Propylene random copolymers as well as heterophasic propylene copolymers are well established in a lot of applications, such as moulding applications, like blow moulding and injection moulding, or film extrusion applications for the production of material such as food packaging, medical packaging and consumer products.

For many applications a soft and flexible material is needed.

The softness of the heterophasic polypropylene systems, i.e. systems obtained in a at least two stage process resulting in a multiphase structure comprising a propylene matrix and inclusions therein comprising amorphous elastomer copolymers can, for example, be increased with an increased comonomer content in the matrix.

However there are limits set by the processes employed for the manufacture of heterophasic propylene copolymers with regard to the comonomer content. For instance too high amounts of comonomer content in the first process stage, i.e. in the first reactor, impede the transfer of the obtained matrix due to stickiness problems in the transfer lines.

But not only the high comonomer content in the composition causes serious problems in the reactions vessels or transfer lines but also the final product suffers from its tacky behaviour. Such tacky products will be not accepted by the customers due to unpleasant touch feeling. For state of the art processes it is an additional disadvantage that for achieving higher comonomer content in the composition a higher comonomer/propylene ratio is needed. Higher gas ratios mean that higher amounts of comonomer have to be recovered and further lead to higher costs.

Thus there is an ongoing need for improved processes which provide propylene random copolymers and heterophasic propylene copolymers derived therefrom with high softness, thus containing a high amount of comonomer in the propylene random copolymer, and being simultaneously not sticky, thus having excellent process properties, said process avoiding the disadvantages of the state of the art processes.

According to the state of the art several proposals have already been made for preparing propylene random copolymers.

EP 1 538 167, for example, describes, i.a., the alpha-olefin propylene copolymerisation using a catalyst system which comprises the following components (A), (B) and (C):

Component (A): a solid component (i) containing magnesium, titanium, halogen and an internal donor,
Component (B): an organometallic compound and
Component (C): an organosilicon compound represented by the formula

$$Si(OR^1)_3(NR^2R^3)$$

wherein $R^1$ is a hydrocarbon group having 1 to 6 carbon atoms, $R^2$ is a hydrocarbon group having 1 to 12 carbon atoms or hydrogen atom, and $R^3$ is a hydrocarbon group having 1 to 12 carbon atoms and optionally
Compound (D): a further organosilicon compound different from Component (C).

Component (A) may be prepared for example by co-grinding a magnesium compound, an electron donor and a titanium halide compound, or by dispersing and dissolving them in a solvent to allow them to contact each other. A further method mentioned comprises dissolving a magnesium compound and an electron donor in a solvent and adding a titanium halide compound to the resulting solution to precipitate a solid catalyst.

According to the description of EP 1 538 167 this catalyst system allows production of an alpha-olefin polymer, like polypropylene random copolymers, with high hydrogen response, high polymerisation rate, high stereoregularity, good randomness and good melt fluidity. It is further stated that a highly transparent film can be produced because of good randomness and a film with no atactic constituent-originated stickiness can be produced because of high stereoregularity of the propylene part.

Propylene random copolymers according to EP 1 538 167 are prepared in one stage, being either a slurry polymerisation stage or a gas phase polymerisation stage. This actual polymerisation stage is combined with a prepolymerisation stage.

Heterophasic propylene copolymers (named block copolymers) according to EP 1 538 167 comprise a first step of

homopolymerising propylene and a second step of block copolymerising propylene and an alpha-olefin comonomer.

EP 1 783 145 discloses a method for producing i.a. a polypropylene random copolymer using a catalyst system which comprises the following components (A), (B) and (C):

Component (A): a prepolymer obtained by olefin prepolymerisation on solid titanium catalyst component (A'), prepared by contacting a solid component (i) containing magnesium, titanium, halogen and an donor ($c_3$), a polar compound (ii) having a dipole moment of 0.5 to 4.0 Debye, and at least one compound (iii) selected from liquid titanium (d) and an electron donor (e)

Component (B): an organometallic compound and

Component (C): an organosilicon compound represented by the formula

$$Si(OR^1)_3(NR^2R^3)$$

wherein $R^1$ is a hydrocarbon group having 1 to 8 carbon atoms, $R^2$ is a hydrocarbon group having 1 to 12 carbon atoms or hydrogen atom, and $R^3$ is a hydrocarbon group having 1 to 12 carbon atoms.

The propylene copolymer compositions, for example polypropylene random copolymers, obtained according to EP 1 783 145 can be processed into a desired moulded such as automotives, domestic electric appliances, and others, films for retorting, etc., sheets, blow moulded products, and injection blow moulded products, obtained by performing various moulding methods including an injection moulding method, an extrusion moulding method, an injection blow moulding method, and a blow moulding method. The only advantage mentioned in EP 1 783 145 is that olefinic polymers having high fluidity as well as high stereoregularity even without excessive use of hydrogen molecule as chain transfer agent can be effectively manufactured.

Only processes wherein a step of homopolymerising propylene and a step of copolymerising propylene, and at least one olefin selected from ethylene and an alpha-olefin having 4 or more carbon atoms which are carried out sequentially are described for at least two-stage processes.

None of these documents suggests a solution for solving the above described problems associated with the need of high comonomer content in such a matrix for providing the necessary softness of the heterophasic propylene copolymer derived therefrom.

It was therefore an object of the present invention to provide an improved, more efficient two-stage process which allows the production of propylene random copolymers, said propylene random copolymers being suitable as matrix for soft heterophasic propylene copolymers, and which process avoids the problems associated with the need of high comonomer content.

The finding of the present invention is that the object can be solved with a two-stage process comprising a slurry phase copolymerisation step and a subsequent gas phase copolymerisation step using a Ziegler-Natta procatalyst and a special external cocatalyst.

Thus the present invention is directed to a process for producing propylene random copolymers with an $MFR_2$ in accordance with ISO 1133 (230°C, 2.16 kg) in the range of 0.1 to 200 g/10min and an ethylene and/or $C_4$-$C_{12}$ alpha-olefin comonomer content in the range of 1 to 15 wt% based on the propylene random copolymer, said process comprises the steps of

a) polymerising propylene and ethylene and/or a $C_4$-$C_{12}$ alpha-olefin comonomer in a slurry reactor in the presence of hydrogen and a polymerisation catalyst system, obtaining as slurry reactor product a first propylene copolymer component; the comonomer/propylene ratio being in the range of 2 to 40 mol/kmol, and the hydrogen/propylene ratio being in the range of 0.1 to 30 mol/kmol,

b) transferring the slurry reactor product into a gas phase reactor

c) further polymerising propylene and ethylene and/or a $C_4$-$C_{12}$ alpha-olefin comonomer in the presence of said slurry reactor product, the polymerisation catalyst system and additional hydrogen;

the comonomer/propylene ratio being in the range of 5 to 60 mol/kmol, and the hydrogen/propylene ratio being in the range of 2 to 200 mol/kmol,

d) optionally recovering the so produced propylene random copolymer for further processing, said polymerisation catalyst system comprising

(i) a Ziegler-Natta procatalyst and

(ii) an organometallic cocatalyst and

(iii) an external donor represented by formula (I)

$$Si(OCH_2CH_3)_3(NR^1R^2) \text{ (I)}$$

wherein $R^1$ and $R^2$ can be the same or different and represent a hydrocarbon group having 1 to 12 carbon atoms.

It has surprisingly been found that the process of the invention allows the production of propylene random copolymers in a more efficient way with lower gas ratios (hydrogen/propylene as well as comonomer/propylene ratio), compared to state of the art processes, needed to achieve high comonomer content. Such propylene random copolymers are suitable as matrix of soft heterophasic propylene copolymers.

By the expression "random copolymer" is meant herein that the comonomer in said copolymer is distributed randomly, i.e. by statistical insertion of the comonomer units, within the copolymer chain. Said term "random" copolymer is generally known and used in the art.

For the purpose of this application, the expression "heterophasic propylene copolymers" or "heterophasic copolymers" always refer to heterophasic copolymers having a propylene random copolymer as matrix.

According to the invention the propylene random copolymers are obtained by a two-stage polymerisation process in the presence of a catalyst system comprising as component (i) a Ziegler-Natta procatalyst, (ii) an organometallic cocatalyst and (iii) an external donor represented by formula (I)

$$Si(OCH_2CH_3)_3(NR^1R^2) \qquad (I)$$

wherein $R^1$ and $R^2$ can be the same or different and represent a hydrocarbon group having 1 to 12 carbon atoms.

The Ziegler-Natta procatalyst (i) used according to the present invention is typically a stereospecific, high yield Ziegler-Natta procatalyst comprising as essential component a solid transition metal component. This type of procatalysts comprise, as described in detail below, in addition to the solid transition metal (like Ti) component a cocatalyst(s) (ii) as well external donor(s) (iii) as stereoregulating agent.

The solid transition metal component preferably comprises a magnesium halide and a transition metal compound. These compounds may be supported on a particulate support, such as inorganic oxide, like silica or alumina, or, usually, the magnesium halide itself may form the solid support. Examples of such catalysts are disclosed, among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754 and WO 2004/029112.

It is also possible that solid catalysts are self supported, i.e. the catalysts are not supported on an external support, but are prepared via emulsion-solidification technology, as described for example in WO 03/000757, WO 03/000754 and WO 2004/029112.

In addition to the magnesium halide and transition metal compound the solid transition metal component usually also comprises an electron donor (internal electron donor). Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4347160, US 4382019, US 4435550, US 4465782, US 4473660, US 4530912 and US 4560671.

Preferably the Ziegler-Natta procatalyst (i) used for the present invention is a Ziegler-Natta procatalyst, which contains a trans-esterification product of a $C_1$-$C_4$-alcohol and a phthalic ester as internal donor and which is optionally modified with a vinyl compound of formula (II) $CH_2$=CH-$CHR^3R^4$, wherein $R^3$ and $R^4$ together form a 5- or 6-membered saturated, unsaturated or aromatic ring or independently represent an alkyl group comprising 1 to 4 carbon atoms.

Such a preferred procatalyst (i) used according to the invention is prepared by

a) reacting a spray crystallized or emulsion solidified adduct of $MgCl_2$ and a $C_1$-$C_4$-alcohol with $TiCl_4$

b) reacting the product of stage a) with a dialkylphthalate of formula (III)

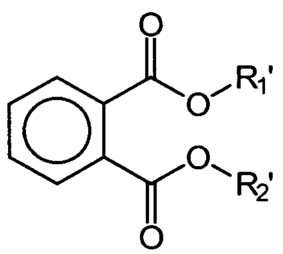
(III)

wherein $R_1$' and $R_2$' are independently at least a $C_5$-alkyl,

under conditions where a transesterification between said $C_1$-$C_4$-alcohol and said dialkylphthalate of formula (III) takes place to form the internal donor,

c) washing the product of stage b) and

d) optionally reacting the product of step c) with additional $TiCl_4$.

The procatalyst is produced as defined for example in the patent applications WO 87/07620, WO 92/19653, WO 92/19658 and EP 0 491 566.

First an adduct of $MgCl_2$ and a $C_1$-$C_4$-alcohol of the formula $MgCl_2$*nROH, wherein R is $C_1$-$C_4$-alkyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgC1_2$*nROH, wherein R is $C_1$-$C_4$-alkyl, preferably ethyl and n is 1 to 6, is contacted with $TiCl_4$ to form a titanised carrier, followed by the steps of

- adding to said titanised carrier

  (i) a dialkylphthalate of formula (III) with $R_1$' and $R_2$' being independently at least a $C_5$-alkyl, like at least a $C_8$-alkyl, or preferably

  (ii) a dialkylphthalate of formula (III) with $R_1$' and $R_2$' being the same and being at least a $C_5$-alkyl, like at least a $C_8$-alkyl

  or more preferably

  (iii) a dialkylphthalate of formula (III) selected from the group consisting of propylhexylphthalate (PrHP), di(ethylhexyl)phthalate (DOP), di-iso-decylphthalate (DIDP), and ditridecylphthalate (DTDP), yet more preferably the dialkylphthalate of formula (III) is di(ethylhexyl)phthalate (DOP) or di-iso-octylphthalate, in particular diethylhexylphthalate,

  to form a first product,
- subjecting said first product to suitable transesterification conditions, i.e. to a temperature between 100 to 150 °C, such that said $C_1$-$C_4$-alkohol is transesterified with said ester groups of said dialkylphthalate of formula (III) to form preferably at least 80 mol-%, more preferably at least 90 mol-%, most preferably at least 95 mol-%, of a dialkylphthalate of formula (IV)

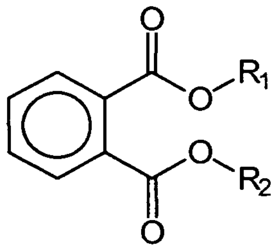

(IV)

  with $R_1$ and $R_2$ being $C_1$-$C_4$-alkyl, preferably ethyl,
  the dialkylphthalate of formula (IV) being the internal donor and
- recovering said transesterification product as the procatalyst composition.

The adduct of the formula $MgCl_2$*nROH, wherein R is $C_1$-$C_4$-alkyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

The transesterification is performed at a temperature above 100°C, advantageously between 130 to 150 °C. As the catalyst residue is removed by extracting, an adduct of the titanised carrier and the internal donor is obtained, in which the group deriving from the ester alcohol has changed.

In case a sufficient amount of titanium remains on the carrier, it will act as an active element of the procatalyst. Otherwise the titanisation is repeated after the above treatment in order to ensure a sufficient titanium concentration and thus activity.

Preferably the procatalyst used according to the invention contains 2.5% by weight of titanium at the most, preferably 2.2% by weight at the most and more preferably 2.0 % by weight at the most. Its donor content is preferably between 4 to 12% by weight and more preferably between 6 and 10 % by weight.

More preferably the procatalyst used according to the invention has been produced by using ethanol as the alcohol and di(ethylhexyl)phthalate (DOP) as dialkylphthalate of formula (III), yielding diethyl phthalate (DEP) as the internal donor compound.

Still more preferably the procatalyst used according to the invention is a catalyst prepared according to WO92/19653; especially with the use of di(ethylhexyl)phthalate as dialkylphthalate of formula (III) or alternatively a polypropylene catalyst in the series of Polytrack, commercially available from Grace.

For the production of the polypropylene random copolymers according to the invention the catalyst system used comprises in addition to the Ziegler-Natta procatalyst (i) an organometallic cocatalyst as component (ii).

Accordingly it is preferred to select the cocatalyst from the group consisting of trialkylaluminium, like triethylaluminium (TEA), triisobutylaluminium, tri-n-butylaluminium; dialkyl aluminium chloride, like dimethyl- or diethyl aluminium chloride; and alkyl aluminium sesquichloride. More preferably the cocatalyst is triethylaluminium or diethylaluminium chloride, most preferably triethylaluminium is used as cocatalyst.

The Ziegler-Natta procatalyst suitable for producing the heterophasic polypropylene copolymer according to the invention can be modified by prepolymerising it with a vinyl compound of the formula (II):

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the polymer composition. The polymerised vinyl compound can act as a nucleating agent.

The vinyl compound suitable for modifying the procatalyst is preferably selected from vinyl cyclohexene, vinyl cyclopentane, vinyl-2-methyl cyclohexene and vinyl norbornane, 3-methyl-1-butene, styrene, p-methyl-styrene, 3-ethyl-1-hexene or mixtures thereof.

Concerning the modification of the procatalyst reference is made to the international applications WO 99/24478, WO 99/24479, WO 99/24503 and particularly WO 00/68315.

Furthermore the catalysts system used comprises an external donor represented by formula (I)

$$Si(OCH_2CH_3)_3(NR^1R^2)$$

wherein $R^1$ and $R^2$ can be the same or different a represent a hydrocarbon group having 1 to 12 carbon atoms.

$R^1$ and $R^2$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^1$ and $R^2$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably both $R^1$ and $R^2$ are the same, yet more preferably both $R^1$ and $R^2$ are an ethyl group.

Most preferably diethylaminotriethoxysilane is used as external donor.

The external donor may be produced according to the methods disclosed in EP 1538 167.

The weight ratio of the organoaluminium compound to external donor ranges preferably between 1 and 10, more preferably between 2 and 5.

Surprisingly it has been found that by the usage of the special combination of a Ziegler-Natta procatalyst, an organometallic cocatalyst and a specific external donor, for the preparation of propylene random copolymers with high comonomer content, clearly less comonomer is needed as normally used in order to reach similar comonomer content after the slurry phase polymerisation step and even far less comonomer is needed as normally used in order to reach similar comonomer content after the gas phase polymerisation step.

The same is true for the amount of hydrogen needed. With the process of the invention clearly lower hydrogen/propylene ratios are needed in the slurry phase as well as in the gas phase polymerisation step in order to achieve the desired properties of the propylene random copolymer.

As a consequence the process is more efficient compared to known processes, needs less raw material, reduces the need of recovery of comonomer and/or hydrogen, thus lowers the production costs.

As an additional advantage it is to be mentioned that also the randomness of the produced copolymer after the slurry phase polymerisation as well as after the gas phase polymerisation is improved with the process according to the invention.

A further advantage is that grade changes from the random copolymers to homopolymers can be done faster in the propylene plants, since less ethylene is present in the process.

According to the present invention the special combination of Ziegler-Natta procatalyst, organometallic cocatalyst and specific external donor as described above is used in a two-stage polymerisation process.

The first polymerisation step of the process according to the invention is a slurry phase polymerisation step.

The second polymerisation step of the process according to the invention is a gas phase polymerisation step, which is performed in a gas phase reactor.

A preferred sequential polymerisation process is a "loop/gas phase"-process, such as developed by Borealis

(known as BORSTAR® technology) described e.g. in patent literature, such as in EP 0 887 379, WO 92/12182, WO 99/24478, WO 99/24479 or in WO 00/68315.

A further suitable slurry-gas phase process is the Spheripol® process of Basell.

With respect to the above-mentioned preferred slurry-gas phase process, the following general information can be provided with respect to the process conditions.

The polymerisation in the first polymerisation step is as mentioned above conducted in slurry, whereby the polymer particles formed in the polymerisation, together with the catalyst fragmented and dispersed within the particles, are suspended in a fluid hydrocarbon. The slurry is agitated to enable the transfer of reactants from the fluid into the particles.

Slurry polymerisation is preferably a so called bulk polymerisation. By "bulk polymerisation" is meant a process where the polymerisation is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerisation, the inert components tend to accumulate, and thus the reaction medium may comprise up to 40 wt% of other compounds than monomer. It is to be understood, however, that such a polymerisation process is still within the meaning of "bulk polymerisation", as defined above.

The temperature in the slurry polymerisation is typically from 50 to 110°C, preferably from 60 to 100°C and in particular from 65 to 95°C. The pressure is from 1 to 150bar, preferably from 10 to 100bar. In some cases it may be preferred to conduct the polymerisation at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture.

The slurry polymerisation may be conducted in any known reactor used for slurry polymerisation. Such reactors include a continuous stirred tank reactor and a loop reactor. It is especially preferred to conduct the polymerisation in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be from 1 to 8 hours.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

Into the slurry polymerisation stage other components may also be introduced as it is known in the art. Thus, hydrogen is added to control the molecular weight of the polymer. Process additives may also be introduced into the reactor to facilitate a stable operation of the process.

Since the slurry polymerisation stage is followed by a gas phase polymerisation stage it is preferred to conduct the slurry directly into the gas phase polymerisation zone without a flash step between the stages. This kind of direct feed is described in EP-A-887379, EP-A-887380, EP-A-887381 and EP-A-991684.

The polymerisation in gas phase may be conducted in a fluidized bed reactor, in a fast fluidized bed reactor or in a settled bed reactor or in any combination of these. When a combination of reactors is used then the polymer is transferred from one polymerisation reactor to another. Furthermore, a part or whole of the polymer from a polymerisation stage may be returned into a prior polymerisation stage.

Ad fluidized bed:

In a fluidized bed gas phase reactor an olefin is polymerised in the presence of a polymerisation catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871. One or more of the above-mentioned components may be continuously added into the fluidization gas to compensate for losses caused, among other, by

reaction or product withdrawal.

From the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087361. Other types of fluidization grids are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerisable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerisation.

The catalyst may be introduced into the reactor in various ways, either continuously or intermittently. Among others, WO-A-01/05845 and EP-A-499759 disclose such methods. Where the gas phase reactor is a part of a reactor cascade the catalyst is usually dispersed within the polymer particles from the preceding polymerisation stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidized bed. An example of suitable agitator design is given in EP-A-707513.

Typically the fluidized bed polymerisation reactor is operated at a temperature within the range of from 50 to 100 °C, preferably from 65 to 90 °C. The pressure is suitably from 10 to 40 bar, preferably from 15 to 30 bar.

Ad fast fluidized bed:

The polymerisation may also be conducted in a fast fluidized bed reactor. In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer

particles.

The polymer is transferred to a subsequent reaction zone, such as a settled bed or a fluidized bed or another fast fluidized bed reactor. The gas, on the other hand, is compressed, cooled and recycled to the bottom of the fast fluidized bed reactor. In one such embodiment the polymer is transferred from the riser (operated in fast fluidized mode) into the downcomer (operated as settled bed, as explained below) and the fluidizing gas is then directed to compression and cooling as described above. The combination of fast fluidized bed and settled bed is disclosed, among others, in WO-A-97/04015, WO-A-2006/022736 and WO-A-2006/120187.

Typically the fluidized bed polymerisation reactor is operated at a temperature within the range of from 50 to 100 °C, preferably from 65 to 90 °C. The pressure is suitably from 10 to 40 bar, preferably from 15 to 30 bar.

Ad settled bed:

Polymerisation may also be conducted in a settled bed. In the settled bed the polymer flows downward in a plug flow manner in an environment containing reactive components in gaseous phase. The polymer powder is introduced into the bed from the top from where it flows downwards due to gravity.

The reactants, such as hydrogen, monomer and comonomers, may be introduced at any point of the reactor. However, where the gas flows upwards its velocity should not exceed the minimum fluidization velocity as otherwise no downward flow of powder would be obtained. It is also preferred to have a gas buffer at the top of the reactor so that reaction gas from previous polymerisation zones contained in the polymer powder would be removed to the extent possible.

The temperature of the settled bed may be controlled by adjusting the temperature and ratio of the reactant and/or inert gases introduced into the settled bed zone.

The settled bed polymerisation zone is preferably combined with a fluidized bed polymerisation zone or fast fluidized bed reaction zone. Thus, the polymer is introduced into the top of the settled bed zone from a fluidized bed zone or a fast fluidized bed zone. The polymer is withdrawn from the bottom of the settled bed polymerisation zone and recycled into the fluidized bed polymerisation zone or fast fluidized bed polymerisation zone.

Polymerisation in settled bed is disclosed, among others, in EP-A-1633466, EP-A-1484343 and WO-A-97/04015.

Typically the settled bed polymerisation reactor is operated at a temperature within the range of from 50 to 100 °C, preferably from 65 to 90 °C. The pressure is suitably from 10 to 40 bar, preferably from 15 to 30 bar.

Preferably the process comprises also a prepolymerisation step.

In a preferred embodiment, the prepolymerisation is conducted in a continuous manner as bulk slurry polymerisation in liquid propylene, i.e. the liquid phase mainly comprises propylene, with minor amount of other reactants and optionally inert components dissolved therein. Preferably the prepolymerisation is conducted in a continuous stirred tank reactor or a loop reactor.

The prepolymerisation reaction is typically conducted at a temperature of 0 to 60 °C, preferably from 10 to 50 °C, and more preferably from 20 to 45 °C.

The pressure in the prepolymerisation reactor is not critical but must be sufficiently high to maintain the reaction mixture in liquid phase. Thus, the pressure may be from 20 to 100 bar, for example 30 to 70 bar.

The prepolymerisation is carried out at an average residence time of 5 minutes up to 90 min. Preferably the average residence time is within the range of 10 to 60 minutes and more preferably within the range of 20 to 50 minutes.

The reaction conditions are well known in the art as disclosed, among others, in GB 1580635.

In the prepolymerisation step it is also possible to feed comonomers into the prepolymerisation stage. Examples of suitable comonomers are ethylene or alpha-olefins having from 4 to 10 carbon atoms. Especially suitable comonomers are ethylene, 1-butene, 1-hexene, 1-octene or their mixtures. Most preferable comonomer is ethylene.

In average, the amount of prepolymer on the catalyst is preferably from 10 to 1000 g per g of the solid catalyst component, more preferably is from 50 to 500 g per g of the solid catalyst component.

As the person skilled in the art knows, the catalyst particles recovered from a continuous stirred prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst is preferably within the limits specified above. The amount of prepolymer is known in the art, among others, from GB 1580635.

The catalyst components are preferably all introduced into the prepolymerisation step. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into

the prepolymerisation stage to control the molecular weight of the prepolymer as is known in the art. Further, antistatic additive may be used to prevent the particles from adhering to each other or the walls of the reactor as disclosed in WO-A-00/66640.

According to the present invention the first stage is a slurry phase polymerisation, preferably performed in a loop reactor.

In this first step propylene and an ethylene and/or $C_4$-$C_{12}$ alpha-olefin comonomer are polymerised.

Suitable $C_4$-$C_{12}$ alpha-olefin comonomers, preferably $C_4$-$C_{10}$ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

The comonomer content in the slurry phase polymerisation product is in the range of 0.5 to 5 wt%, preferably 1.0 to 4.5 wt% and more preferably 2.0 to 4.0wt%, based on the slurry phase polymerisation product.

In order to achieve this comonomer content propylene and comonomer are fed to the slurry phase reactor, preferably loop reactor with a comonomer/propylene, preferably ethylene/propylene ($C_2/C_3$), ratio in the range of 2 to 40 mol/kmol, preferably 5 to 30 mol/kmol and more preferably 10 to 30 mol/kmol.

Furthermore hydrogen is added to the slurry phase reactor, preferably loop reactor. According to the invention the hydrogen/propylene ($H_2/C_3$) ratio used is in the range of 0.1 to 30 mol/kmol, preferably 0.2 to 20 mol/kmol and more preferably 5.0 to 20 mol/kmol.

The $MFR_2$ measured in accordance with ISO 1133 (230°C, 2.16kg) of the slurry phase polymerisation product is in the range of 0.1 to 200 g/10min, preferably 0.5 to 100 g/10min and more preferably 1.0 to 50.0 g/10min.

The xylene cold soluble fraction measured according to ISO 6427 (23 °C) of the slurry phase polymerisation product is preferably in the range of 3.0 to 9.0 wt%.

The slurry phase polymerisation product, being a first propylene copolymer component, is then transferred to the gas phase reactor.

In the gas phase reactor further propylene and further ethylene and/or $C_4$-$C_{12}$ alpha-olefin comonomer are polymerised in the presence of the slurry phase polymerisation product.

The comonomer used in the gas phase reactor may be different from that used in the slurry phase polymerisation, but is preferably the same.

Again suitable $C_4$-$C_{12}$ alpha-olefin comonomers, preferably $C_4$-$C_{10}$ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

According to the invention propylene and the comonomer are fed to the gas phase reactor in a comonomer/propylene, preferably ethylene/propylene ($C_2/C_3$), ratio in the range of 5 to 60 mol/kmol and preferably 20 to 50 mol/kmol.

In addition hydrogen is added to the gas phase polymerisation in a hydrogen/propylene ratio in the range of 2.0 to 200 mol/kmol, preferably 5.0 to 150 mol/kmol and more preferably 20 to 150 mol/kmol.

The product yielded after the gas phase polymerisation is the desired propylene random copolymer.

The propylene random copolymer produced according to the invention has an $MFR_2$ measured in accordance with ISO 1133 (230°C, 2.16kg) in the range of 0.1 to 200 g/10min, preferably 0.5 to 100 g/10min and more preferably 1.0 to 50.0 g/10min.

The comonomer content of the propylene random copolymer produced according to the invention is in the range of 1 to 15 wt%, preferably 1 to 8 wt%, based on the total propylene random copolymer.

The xylene cold soluble fraction measured according to ISO 6427 (23 °C) of the propylene random copolymer is preferably in the range of 3.0 to 20.0 wt%.

From comparative examples it can be seen that the polymer properties, like $MFR_2$ and comonomer content, can be achieved with clearly less hydrogen and comonomer amounts, thus with clearly lower comonomer/propylene and hydrogen/propylene ratios, in the slurry phase reactor, preferably loop reactor, as well as in the gas phase reactor compared to processes using different catalyst systems, especially different external donor.

A further advantage of the process according to the invention is an improvement of the randomness of the produced polymer, after the slurry phase reactor, preferably loop reactor, as well as after the gas phase reactor.

The process according to the present invention is more efficient, since less raw material are needed and less unreacted comonomer has to be recovered, thus the propylene random copolymers can be produced with lower costs.

The copolymers of the invention may further contain various conventional additives, such as antioxidants, UV-stabilizers, acid scavengers, antistatics, lubricants, demoulding agents, nucleating agents, clarifiers, fillers, coloring agents in an amount of 0.001 to 10 wt.%, preferably up to 5.0 wt% and more preferably up to 3.0 wt% based on the weight of the polypropylene random copolymer.

In the preferred embodiments, the additives are added to the polypropylene random copolymer. Preferably, these additives are mixed into the composition prior to or during the extrusion process in a one-step compounding

process. Alternatively, a master batch may be formulated, wherein the propylene random copolymer is first mixed with only some of the additives.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive polypropylene random copolymers.

Propylene random copolymers according to the invention may be pelletized and compounded using any of the variety of compounding and blending methods well known and commonly used in the resin compounding art.

The propylene random copolymers of the current invention can be used for the production of films.

The propylene random copolymer produced according to the invention can further be used as matrix for producing soft heterophasic propylene copolymers.

In this case such heterophasic propylene copolymers comprise

a) 60 to 99wt% of the propylene random copolymer prepared as described above as matrix phase, and

b) 1 to 40wt% of an elastomeric phase dispersed in said matrix.

The elastomeric phase, also called rubber phase, of the heterophasic propylene copolymer may be selected among typical rubbers, such as elastomeric polyolefins, styrenics, including SEBS, diene rubbers as well as copolymer rubbers comprising olefin monomers as well as non-conjugated diene monomers, such as EPDM and mixtures thereof. Preferred are copolymer rubbers comprising olefin monomers as well as non-conjugated diene monomers. More preferably, said rubber is selected from the group of copolymer rubbers comprising olefin monomers. Particularly preferred is an ethylene-propylene rubber (EPR).

The heterophasic propylene copolymer may be prepared in any suitable manner known to the art skilled person, including mechanical compounding processes as well as sequential polymerisation processes, i.e. by a further polymerisation carried out in the presence of the already polymerized matrix phase.

Preferably, the heterophasic propylene copolymer is a reactor made heterophasic propylene copolymer.

Thus in a preferred embodiment the process according to the invention, as described above, for preparing the propylene random copolymer, which serves as matrix for the heterophasic propylene copolymer to be produced, includes one or two further gas phase reactors connected in series in which the rubber, preferably the ethylene-propylene rubber, is produced in the presence of the already polymerized matrix phase.

Such a preferred multistage process for preparing soft heterophasic propylene copolymers comprises the steps of

- producing the propylene random copolymer matrix, as described above, in a slurry phase polymerisation and a subsequent first gas phase polymerisation
- transferring the first gas phase polymerisation product, i.e. the propylene random copolymer matrix to a second gas phase reactor
- producing an ethylene and/or $C_4$-$C_{12}$ alpha-olefin comonomer/propylene copolymer (A) in the presence of said matrix
- optionally transferring the second gas phase polymerisation product to a third gas phase reactor
- producing a further ethylene and/or $C_4$-$C_{12}$ alpha-olefin comonomer/propylene copolymer (B) in the presence of the second gas phase polymerisation product
- said ethylene and/or $C_4$-$C_{12}$ alpha-olefin comonomer /propylene copolymers (A) and (B) having the same or different composition
- recovering the heterophasic propylene copolymer for further processing.

Suitable $C_4$-$C_{12}$ alpha-olefin comonomers, preferably $C_4$-$C_{10}$ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

The rubber produced in such a process can be unimodal or bimodal.

As used herein the term "bimodal" are intended to cover polymers having at least two differently centred maxima

along the x-axis of their molecular weight distribution curve as determined by gel permeation chromatography. In such a curve d(log(Mw)) is plotted as ordinate against log (Mw), where Mw is molecular weight.

The properties of the elastomeric propylene copolymer mainly influence the xylene cold soluble content as well as the amorphous phase of the final heterophasic polypropylene copolymer. Thus according to the present invention the amorphous phase of the heterophasic polypropylene copolymer is regarded as the elastomeric propylene copolymer of the heterophasic polypropylene copolymer.

The xylene cold soluble content includes besides the total amount of elastomeric propylene copolymer dispersed within the matrix also polymer chains of the polypropylene matrix with low molecular weight and low stereoregularity, so that normally the XCS value is slightly higher than the amorphous (AM) value.

The heterophasic propylene copolymers comprising the propylene random copolymer produced with the processes according to the present invention as matrix phase are characterised by a high comonomer, preferably ethylene, content ($C_2$ total and $C_2$/AM) and low molecular weight of the rubber part.

The heterophasic propylene copolymer comprising the propylene random copolymer matrix and the elastomeric propylene copolymer as defined above is characterized by a xylene cold soluble fraction at room temperature being present in an amount of 5 to 50 wt% of the heterophasic propylene copolymer.

Preferably the XCS fraction is present in an amount of 10 to 40 wt% of the heterophasic propylene copolymer.

Furthermore the amorphous phase of the XCS fraction of the heterophasic propylene copolymer has an intrinsic viscosity measured according to ISO 1628-1 (at 135°C in tetraline) in the range of 1.0 to 4.0 dl/g, preferably 1.3 to 3.0 dl/g.

The heterophasic propylene copolymer of the present invention is further featured by a flexural modulus according to ISO 178 of lower than 800 MPa, preferably lower than 700 MPa, more preferably lower than 600 MPa and most preferably lower than 500 MPa.

The desired heterophasic propylene copolymer is also thermo-mechanically stable. Accordingly the heterophasic propylene copolymer has a melting point of at least 155°C, preferably at least 158°C and more preferably of at least 160°C up to 170°C.

The total comonomer, preferably ethylene, content of the heterophasic propylene copolymer is within the range of 5 to 25 wt%, preferably 10 to 15 wt%.

The $MFR_2$ of the final heterophasic propylene copolymer is in the range of 0.3 to 100 g/10 min, preferably in the range of 0.5 to 50 g/10 min and more preferably in the range of 1 to 20 g/10 min.

The heterophasic propylene copolymer of the present invention is furthermore featured by excellent process properties, i.e. the copolymer is non-sticky and causes no reactor fouling.

The heterophasic propylene copolymer of the present invention as defined above may contain up to 2.0 wt% of additives commonly employed in the polyolefin field, like antioxidants, light stabilizers, nucleating agents, slip agents, colorants and fillers.

The main application of the heterophasic propylene copolymer of the invention is the production of films, particularly soft films.

## EXAMPLES:

### A.METHODS

#### Melt Flow Rate ($MFR_2$)

The melt flow rates were measured with a load of 2.16 kg ($MFR_2$) at 230 °C. The melt flow rate is that quantity of polymer in grams which the test apparatus standardized to ISO 1133 extrudes within 10 minutes at a temperature of 230 °C under a load of 2.16 kg.

#### Comonomer content

The comonomer contents of the copolymer was determined by quantitative Fourier transform infrared spectroscopy (FTIR) calibrated to results obtained from quantitative $^{13}C$ NMR spectroscopy.

When measuring the ethylene content in polypropylene, a thin film of the sample (thickness about 250 mm) was prepared by hot-pressing. The area of $-CH_2-$ absorption peak (800-650 $cm^{-1}$) was measured with Perkin Elmer FTIR 1600 spectrometer.

The comonomer content C was determined using a film thickness method using the intensity of the quantitative band I(q) and the thickness of the pressed film T using the following relationship: $[ I(q) / T ]m + c = C$ where m and c are the coefficients determined from the calibration curve constructed using the comonomer contents obtained from $^{13}C$ NMR spectroscopy.

**Randomness**

In the FTIR measurements, films of 250 microns thickness were compression moulded at 225°C and investigated on a Perkin-Elmer System 2000 FTIR instrument. The ethylene peak area (760-700 $cm^{-1}$) was used as a measure of total ethylene content. The absorption band for the structure -P-E-P- (one ethylene unit between propylene units), occurs at 733 $cm^{-1}$. This band characterizes the random ethylene content. For longer ethylene sequences (more than two units), an absorption band occurs at 720 $cm^{-1}$. Generally, a shoulder corresponding to longer ethylene runs is observed for the random copolymers. The calibration for total ethylene content based on the area and random ethylene (PEP) content based on peak height at 733 $cm^{-1}$ was made by $^{13}$C-NMR. (Thermochimica Acta, 66 (1990) 53-68).

Randomness = random ethylene (-P-E-P-) content / the total ethylene content x 100%.

**Xylene cold soluble fraction (XCS wt%)**

The xylene cold soluble fraction (XCS) is determined at 23 °C according to ISO 6427.

**Intrinsic viscosity (IV)**

The intrinsic viscosity (IV) value increases with the molecular weight of a polymer. The IV values e.g. of the amorphous phase were measured according to ISO 1628/1 (October 1999) in tetraline at 135°C.

**B. EXAMPLES**

**Inventive Example 1 (IE1) and Comparative Example 1 (CE1)**

The random polymer of the inventive example was produced in a Borstar pilot plant with a prepolymerisation reactor, one slurry loop reactor and one gas phase reactor. The catalyst used in the polymerisation process was a 1.9 wt% Ti-Ziegler-Natta-catalyst prepared according to WO 92/19653 with DOP as dialkylphthalat of the formula (III) and ethanol as alcohol with triethyl-aluminium (TEA) as co-catalyst and diethylaminotriethoxysilane as donor in the ratios indicated in table 1.
In the comparative example dicyclopentyldimethoxysilane was used as donor.

**Table 1:**

| Parameter | unit | IE 1 | CE 1 |
|---|---|---|---|
| **Prepolymerisation** | | | |
| temperature | [°C] | 35 | 35 |
| pressure | [kPa] | 5170 | 5200 |
| Al/donor ratio | [mol/mol] | 26 | 25 |
| residence time | [h] | 0.34 | 0.34 |
| Cocatalyst feed | [g/t$C_3$] | 200 | 200 |
| Catalyst feed | [g/h] | 1.5 | 1.84 |
| **Loop** | | | |
| temperature | [°C] | 70 | 70 |
| pressure | [kPa] | 5300 | 5250 |
| residence time | [h] | 0.58 | 0.70 |
| H2/C3 ratio | [mol/kmol] | 0.267 | 0.724 |
| C2/C3 ratio from feeds | [mol/kmol] | 13.3 | 20.3 |
| MFR2 | [g/10min] | 1.0 | 1.1 |
| XCS | [wt%] | 8.5 | 9.5 |

(continued)

| | | | |
|---|---|---|---|
| **Loop** | | | |
| C2 content | [wt%] | 3.9 | 3.8 |
| C2 converison | [%] | 59.9 | 44.6 |
| Randomness | [%] | 69.4 | 65.0 |
| **GPR 1** | | | |
| temperature | [°C] | 80 | 80 |
| pressure | [kPa] | 2400 | 2200 |
| residence time | [h] | 2.9 | 1.2 |
| H2/C3 ratio | [mol/kmol] | 5.5 | 17.8 |
| C2/C3 ratio | [mol/kmol] | 33.25 | 61.17 |
| XCS | [wt%] | 17.4 | 18.3 |
| C2 content | [wt%] | 5.5 | 5.9 |
| MFR2 | [g/10 min] | 2.0 | 1.37 |
| Randomness | [%] | 65.3 | 59.4 |

As can be seen from table 1 the process according to the invention (IE1) needs clearly lower H2/C3 and C2/C3 ratios in loop as well as in the gas phase reactor compared to the comparative example (CE1) in order to achieve comparable properties (C2 content, MFR2) of the produced propylene random copolymer.

Furthermore it can be seen that randomness of the polymer is improved.

**Inventive Example 2 (IE2) and Comparative Example 2 (CE2)**

The process of example 1 was repeated, but a second gas phase reactor subsequent to the first gas phase reactor was used, in order to prepare heterophasic propylene copolymers with propylene random copolymers as prepared in example IE1 and CE1 as matrix. Table 2 shows the parameters of the second gas phase reactor and the properties of the produced heterophasic propylene copolymers.

**Table 2:**

| **Parameter** | **unit** | **IE 2** | **CE 2** |
|---|---|---|---|
| **GPR 2** | | | |
| temperature | [°C] | 70 | 70 |
| pressure | [kPa] | 2600 | 2100 |
| residence time | [h] | 1.34 | 0.69 |
| H2/C2 ratio | [mol/kmol] | 248 | 484 |
| C2/C3 ratio | [mol/kmol] | 217 | 311 |
| XCS | [wt%] | 21.2 | 25.8 |
| C2 content | [wt%] | 11.3 | 10.2 |
| MFR2 | [g/10 min] | 2.35 | 1.64 |
| AM | [wt%] | 19.2 | 23.5 |
| C2/AM | [wt%] | 26.4 | 27.7 |
| iV of AM | [dl/g] | 1.6 | 1.5 |

Again it can be seen that the process according to the invention (IE2) needs also clearly lower H2/C3 and

C2/C3 ratios in the second gas phase reactor where the rubber phase is produced compared to the comparative example (CE2) in order to achieve comparable properties (C2 content, MFR2, iV/AM) of the produced heterophasic propylene copolymer.

## Claims

1. Process for producing propylene random copolymers with an $MFR_2$ in accordance with ISO 1133 (230°C, 2.16 kg) in the range of 0.1 to 200 g/10min and an ethylene and/or $C_4$-$C_{12}$ alpha-olefin comonomer content in the range of 1 to 15 wt% of the propylene random copolymer, said process comprises the steps of

    a) polymerising propylene and ethylene and/or a $C_4$-$C_{12}$ alpha-olefin comonomer in a slurry reactor in the presence of hydrogen and a polymerisation catalyst system obtaining as slurry reactor product a first propylene copolymer component, the comonomer/propylene ratio being in the range of 2 to 40 mol/kmol, and the hydrogen/propylene ratio being in the range of 0.1 to 30 mol/kmol,
    b) transferring the slurry reactor product into a gas phase reactor
    c) further polymerising propylene and ethylene and/or a $C_4$-$C_{12}$ alpha-olefin comonomer in the presence of said slurry reactor product, the polymerisation catalyst system and additional hydrogen, the comonomer/propylene ratio being in the range of 5 to 60 mol/kmol, and the hydrogen/propylene ratio being in the range of 2 to 200 mol/kmol,
    d) optionally recovering the so produced propylene random copolymer for further processing,

    said polymerisation catalyst system comprising

    (i) a Ziegler-Natta procatalyst and
    (ii) an organometallic cocatalyst and
    (iii) an external donor represented by formula (I)

    $$Si(OCH_2CH_3)_3(NR^1R^2) \qquad (I)$$

    wherein $R^1$ and $R^2$ can be the same or different and represent a hydrocarbon group having 1 to 12 carbon atoms.

2. Process according to claim 1, wherein the procatalyst (i) used is a Ziegler-Natta procatalyst, which contains a trans-esterification product of a $C_1$-$C_4$-alcohol and a phthalic ester as internal donor and which is optionally modified with a vinyl compound of formula (II) $CH_2$=CH-CH$R^3R^4$, wherein $R^3$ and $R^4$ together form a 5-or 6-membered saturated, unsaturated or aromatic ring or independently represent an alkyl group comprising 1 to 4 carbon atoms.

3. Process according to claim 2, wherein the procatalyst (i) used has been prepared by

    a) reacting a spray crystallized or emulsion solidified adduct of $MgCl_2$ and a $C_1$-$C_4$-alcohol with $TiCl_4$
    b) reacting the product of stage a) with a dialkylphthalate of formula (III)

    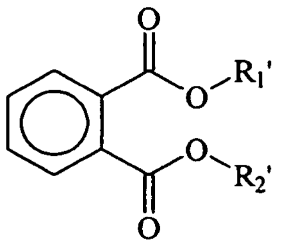

    (III)

    wherein $R_1$' and $R_2$' are independently at least a $C_5$-alkyl
    under conditions where a transesterification between said $C_1$-$C_4$-alcohol and said dialkylphthalate of formula (III) takes place to form the internal donor
    c) washing the product of stage b) and
    d) optionally reacting the product of step c) with $TiCl_4$.

4. Process according to claim 3, **characterized in that** the dialkylphthalate of formula (III) is di(ethylhexyl)phthalate and that the $C_1$-$C_4$-alcohol is ethanol.

5. Process according to anyone of the preceding claims 1 to 4 wherein the Ziegler-Natta procatalyst (i) is used in the presence of an organometallic cocatalyst (ii) select from the group consisting of trialkylaluminium, dialkyl aluminium chloride and alkyl aluminium sesquichloride.

6. Process according to claim 5, **characterized in that** the cocatalyst is triethylaluminium or diethylaluminium chloride.

7. Process according to anyone of the preceding claims 1 to 6, wherein the Ziegler-Natta procatalyst is used in the presence of diethylaminotriethoxysilane as external donor.

8. Process according to anyone of the preceding claims 1 to 7, wherein the process comprises also a prepolymerisation step.

9. Process according to anyone of the preceding claims 1 to 8, wherein the comonomer used in step a) and step c) can be the same or different and is selected from the group of ethylene, 1-butene, 1-pentene, 1-hexene, 4-methyl-1-pentene, 1-heptene, 1-octene, 1-nonene and 1-decene or mixtures therefrom.

10. Process according to claim 9 wherein ethylene is used as the sole comonomer.

11. Process according to anyone of the preceding claims 1 to 10, wherein in step a) the comonomer/propylene ratio is in the range of 5 to 30 mol/kmol, preferably 10 to 20 mol/kmol and the hydrogen/propylene ratio is in the range of 0.2 to 20 mol/kmol and in step c) the comonomer/propylene ratio is in the range of 20 to 50 mol/kmol and the hydrogen/propylene ratio is in the range of 5.0 to 150 mol/kmol.

12. Use of the propylene random copolymers produced according to claims 1 to 11 for the production of films.

13. Use of the propylene random copolymers produced according to claims 1 to 11 as matrix for producing soft heterophasic propylene copolymers.

14. Heterophasic propylene copolymers comprising

a) 60 to 99wt% of the propylene random copolymer prepared according to claims 1 to 11 as matrix phase, and
b) 1 to 40wt% of an elastomeric phase dispersed in said matrix.

15. Process for producing a heterophasic copolymer according to claim 14, the process comprises

- producing a propylene random copolymer matrix according to claim 1 to 10,
- transferring the first gas phase polymerisation product, i.e. the propylene random copolymer matrix to a second gas phase reactor
- producing an ethylene and/or $C_4$-$C_{12}$ alpha-olefin comonomer/propylene copolymer (A) in the presence of said matrix
- optionally transferring the second gas phase polymerisation product to a third gas phase reactor
- producing a further ethylene and/or $C_4$-$C_{12}$ alpha-olefin comonomer/propylene copolymer (B) in the presence of the second gas phase polymerisation product
- said ethylene and/or $C_4$-$C_{12}$ alpha-olefin comonomer /propylene copolymers (A) and (B) having the same or different composition
- recovering the heterophasic propylene copolymer for further processing.

**Patentansprüche**

1. Verfahren zur Herstellung von statistischen Propylen-Copolymeren mit einer $MFR_2$ gemäß ISO 1133 (230°C, 2,16 kg) im Bereich von 0,1 bis 200 g/10 min und einem Ethylen- und/oder $C_4$-$C_{12}$ alpha-Olefin-Comonomer-Anteil im Bereich von 1 bis 15 Gew.-% des statistischen Propylen-Copolymers, wobei das Verfahren die Schritte umfasst von

a) Polymerisieren von Propylen und Ethylen und/oder einem $C_4$-$C_{12}$ alpha-Olefin-Comonomer in einem Suspensions-Reaktor in Gegenwart von Wasserstoff und einem Polymerisations-Katalysator-System zur Gewinnung einer ersten Propylen-Copolymer-Komponente als Suspensions-Reaktor-Produkt, wobei das Comonomer / Propylen-Verhältnis im Bereich von 2 bis 40 Mol/kMol liegt, und das Wasserstoff / Propylen-Verhältnis im Bereich von 0,1 bis 30 Mol/kMol liegt,
b) Überführen des Suspensions-Reaktor-Produkts in einen Gas-Phasen-Reaktor,
c) weiteres Polymerisieren von Propylen und Ethylen und/oder einem $C_4$-$C_{12}$ alpha-Olefin-Comonomer in Gegenwart von dem Suspensions-Reaktor-Produkt, dem Polymerisations-Katalysator-System und zusätzlichem Wasserstoff, wobei das Comonomer / Propylen-Verhältnis im Bereich von 5 bis 60 Mol/kMol liegt und das Wasserstoff / Propylen-Verhältnis im Bereich von 2 bis 200 Mol/kMol liegt,
d) gegebenenfalls Gewinnen des so hergestellten statistischen Propylen-Copolymers zum weiteren Verarbeiten,

wobei das Polymerisations-Katalysator-System umfasst

(i) einen Ziegler-Natta-Prokatalysator und
(ii) einen Organo-Metall-Cokatalysator und
(iii) einen äußeren Donor, wiedergegeben durch die Formel (I)

$$Si(OCH_2CH_3)_3(NR^1R^2) \qquad (I)$$

worin $R^1$ und $R^2$ gleich oder verschieden sein können und eine Kohlenwasserstoff-Gruppe mit 1 bis 12 Kohlenstoff-Atomen wiedergeben.

**2.** Verfahren nach Anspruch 1, wobei der verwendete Prokatalysator (i) ein Ziegler-Natta-Prokatalysator ist, der ein Umesterungs-Produkt von einem $C_1$-$C_4$-Alkohol und einem Phthalsäureester als inneren Donor enthält und der gegebenenfalls mit einer Vinyl-Verbindung der Formel (II) $CH_2$=CH-$CHR^3R^4$, worin $R^3$ und $R^4$ zusammen einen 5- oder 6-gliedrigen gesättigten, ungesättigten oder aromatischen Ring bilden oder unabhängig eine Alkyl-Gruppe, umfassend 1 bis 4 Kohlenstoff-Atome, wiedergeben, modifiziert ist.

**3.** Verfahren nach Anspruch 2, wobei der verwendete Prokatalysator (i) hergestellt wurde durch

a) Umsetzen eines Sprüh-kristallisierten oder Emulsions-verfestigten Addukts von $MgCl_2$ und einem $C_1$-$C_4$-Alkohol mit $TiCl_4$
b) Umsetzen des Produkts von Stufe a) mit einem Dialkylphthalat der Formel (III)

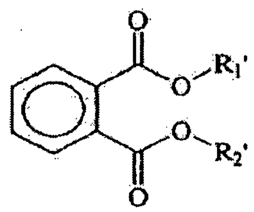

(III)

worin $R_1$' und $R_2$' unabhängig mindestens ein $C_5$-Alkyl darstellen,
unter Bedingungen, bei denen eine Umesterung zwischen dem $C_1$-$C_4$-Alkohol und dem Dialkylphthalat der Formel (III) stattfindet, um den inneren Donor zu bilden,
c) Waschen des Produkts von Stufe b) und
d) gegebenenfalls Umsetzen des Produkts von Schritt c) mit $TiCl_4$.

**4.** Verfahren nach Anspruch 3, **dadurch gekennzeichnet, dass** das Dialkylphthalat der Formel (III) Di(ethylhexyl)phthalat ist und dass der $C_1$-$C_4$-Alkohol Ethanol ist.

**5.** Verfahren nach einem der vorangehenden Ansprüche 1 bis 4, wobei der Ziegler-Natta-Prokatalysator (i) in Gegenwart eines Organo-Metall-Cokatalysators (ii), ausgewählt aus der Gruppe, bestehend aus Trialkylaluminium, Dialkylaluminiumchlorid und Alkylaluminiumsesquichlorid, verwendet wird.

**6.** Verfahren nach Anspruch 5, **dadurch gekennzeichnet, dass** der Cokatalysator Triethylaluminium oder Diethylaluminiumchlorid ist.

7. Verfahren nach einem der vorangehenden Ansprüche 1 bis 6, wobei der Ziegler-Natta-Prokatalysator in Gegenwart von Diethylaminotriethoxysilan als äußeren Donor verwendet wird.

8. Verfahren nach einem der vorangehenden Ansprüche 1 bis 7, wobei das Verfahren auch einen Prepolymerisations-Schritt umfasst.

9. Verfahren nach einem der vorangehenden Ansprüche 1 bis 8, wobei das in Schritt a) und Schritt c) verwendete Comonomer gleich oder verschieden sein kann und aus der Gruppe von Ethylen, 1-Buten, 1-Penten, 1-Hexen, 4-Methyl-1-penten, 1-Hepten, 1-Octen, 1-Nonen und 1-Decen oder Gemischen davon ausgewählt ist.

10. Verfahren nach Anspruch 9, wobei Ethylen als das einzige Comonomer verwendet wird.

11. Verfahren nach einem der vorangehenden Ansprüche 1 bis 10, wobei in Schritt a) das Comonomer / Propylen-Verhältnis im Bereich von 5 bis 30 Mol/kMol, vorzugsweise 10 bis 20 Mol/kMol, liegt und das Wasserstoff / Propylen-Verhältnis im Bereich von 0,2 bis 20 Mol/kMol liegt und in Schritt c) das Comonomer / Propylen-Verhältnis im Bereich von 20 bis 50 Mol/kMol liegt und das Wasserstoff / Propylen-Verhältnis im Bereich von 5,0 bis 150 Mol/kMol liegt.

12. Verwendung der statistischen Propylen-Copolymere, hergestellt nach Ansprüchen 1 bis 11, für die Herstellung von Filmen bzw. Folien.

13. Verwendung der statistischen Propylen-Copolymere, hergestellt nach Ansprüchen 1 bis 11, als Matrix zum Herstellen von weichen heterophasischen Propylen-Copolymeren.

14. Heterophasische Propylen-Copolymere, umfassend

a) 60 bis 99 Gew.-% des statistischen Propylen-Copolymers, hergestellt nach Ansprüchen 1 bis 11, als Matrix-Phase, und
b) 1 bis 40 Gew.-% von einer in der Matrix dispergierten elastomeren Phase.

15. Verfahren zur Herstellung eines heterophasischen Copolymers nach Anspruch 14, wobei das Verfahren umfasst

- Erzeugen einer statistischen Propylen-Copolymer-Matrix nach Anspruch 1 bis 10,
- Überführen des ersten Gas-Phasen-Polymerisations-Produkts, d.h. der statistischen Propylen-Copolymer-Matrix zu einem zweiten Gas-Phasen-Reaktor
- Erzeugen eines Ethylen und/oder $C_4$-$C_{12}$ alpha-Olefin-Comonomer / Propylen-Copolymers (A) in Gegenwart der Matrix
- gegebenenfalls Überführen des zweiten Gas-Phasen-Polymerisations-Produkts zu einem dritten Gas-Phasen-Reaktor
- Erzeugen eines weiteren Ethylen und/oder $C_4$-$C_{12}$ alpha-Olefin-Comonomer / Propylen-Copolymers (B) in Gegenwart des zweiten Gas-Phasen-Polymerisations-Produkts
- wobei das/die Ethylen und/oder $C_4$-$C_{12}$ alpha-Olefin-Comonomer / Propylen-Copolymere (A) und (B) die gleiche oder verschiedene Zusammensetzung aufweisen
- Gewinnen des heterophasischen Propylen-Copolymers zum weiteren Verarbeiten.

**Revendications**

1. Procédé pour produire des copolymères statistiques de propylène présentant un $MFR_2$, conformément à la norme ISO 1133 (230°C, 2,16 kg) situé dans la plage allant de 0,1 à 200 g/10 min et une teneur en comonomère d'éthylène et/ou d'$\alpha$-oléfine en $C_4$ à $C_{12}$ situé dans la plage allant de 1 à 15 % en poids du copolymère statistique de propylène, ledit procédé comprenant les étapes

a) de polymérisation de propylène et d'un comonomère d'éthylène et/ou d'$\alpha$-oléfine en $C_4$ à $C_{12}$ dans un réacteur en suspension en présence d'hydrogène et d'un système catalyseur de polymérisation, ce qui donne, en tant que produit du réacteur en suspension, un premier composant de copolymère de propylène, le rapport comonomère/propylène étant situé dans la plage allant de 2 à 40 mol/kmol, et le rapport hydrogène/propylène étant situé dans la plage allant de 0,1 à 30 mol/kmol,
b) de transfert du produit du réacteur en suspension dans un réacteur en phase gazeuse,

c) encore de polymérisation de propylène et d'un comonomère d'éthylène et/ou d'une $\alpha$-oléfine en $C_4$ à $C_{12}$ en présence dudit produit du réacteur en suspension, du système de catalyseur de polymérisation et d'hydrogène additionnel, le rapport comonomère/propylène étant situé dans la plage allant de 5 à 60 mol/kmol, et le rapport hydrogène/ propylène étant situé dans la plage allant de 2 à 200 mol/kmol,
d) éventuellement de récupération du copolymère statistique de propylène ainsi produit pour un traitement ultérieur,

ledit système catalyseur de polymérisation comprenant

(i) un procatalyseur de Ziegler-Natta, et
(ii) un cocatalyseur organométallique, et
(iii)un donneur externe représenté par la formule (I)

$$Si\ (OCH_2CH_3)_3(NR^1R^2) \qquad (I)$$

dans laquelle $R^1$ et $R^2$ peuvent être identiques ou différents et représentent un groupe hydrocarboné possédant 1 à 12 atomes de carbone.

2. Procédé selon la revendication 1, dans lequel le procatalyseur (i) utilisé est un procatalyseur de Ziegler-Natta, qui contient un produit de trans-estérification d'un alcool en $C_1$ à $C_4$ et d'un ester phtalate à titre de donneur interne et qui est éventuellement modifié par un composé vinylique de formule (II) $CH_2$=CH-CH$R^3R^4$, dans laquelle $R^3$ et $R^4$ forment ensemble un cycle aromatique, saturé ou insaturé, à 5 ou 6 chaînons, ou représentent indépendamment un groupe alkyle comprenant 1 à 4 atome(s) de carbone.

3. Procédé selon la revendication 2, dans lequel le procatalyseur (i) utilisé a été préparé par

a) réaction d'un adduit solidifié en émulsion ou cristallisé par pulvérisation de $MgCl_2$ et d'un alcool en $C_1$ à $C_4$ avec du $TiCl_4$,
b) réaction du produit de l'étape a) avec un phtalate de dialkyle de formule (III)

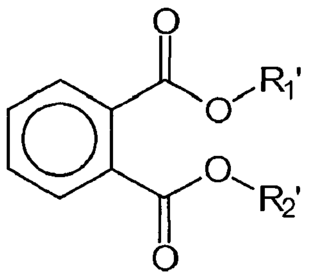

(III)

dans laquelle $R_1$' et $R_2$' sont indépendamment au moins un radical alkyle en $C_5$,
dans des conditions où une trans-estérification entre ledit alcool en $C_1$ à $C_4$ et ledit phtalate de dialkyle de formule (III) a lieu pour former le donneur interne,
c) lavage du produit de l'étape b), et
d) éventuellement réaction du produit de l'étape c) avec du $TiCl_4$.

4. Procédé selon la revendication 3, **caractérisé en ce que** le phtalate de dialkyle de formule (III) est le phtalate de di(éthylhexyle) et **en ce que** l'alcool en $C_1$ à $C_4$ est l'éthanol.

5. Procédé selon l'une quelconque des revendications 1 à 4, dans lequel le procatalyseur de Ziegler-Natta (i) est utilisé en présence d'un cocatalyseur organométallique (ii) choisi dans l'ensemble constitué par un trialkyl-aluminium, un chlorure de dialkyl-aluminium et un sesquichlorure d'alkyl-aluminium.

6. Procédé selon la revendication 5, **caractérisé en ce que** le cocatalyseur est le triéthyl-aluminium ou le chlorure de diéthyl-aluminium.

7. Procédé selon l'une quelconque des revendications 1 à 6, dans lequel le procatalyseur de Ziegler-Natta est utilisé

en présence de diéthylaminotriéthoxysilane à titre de donneur externe.

8. Procédé selon l'une quelconque des revendications 1 à 7, lequel procédé comprend aussi une étape de prépolymérisation.

9. Procédé selon l'une quelconque des revendications 1 à 8, dans lequel le comonomère utilisé dans l'étape a) et l'étape c) peut être identique ou différent et est choisi dans l'ensemble comprenant l'éthylène, le 1-butène, le 1-pentène, le 1-hexène, le 4-méthyl-1-pentène, le 1-heptène, le 1-octène, le 1-nonène et le 1-décène, ainsi que leurs mélanges.

10. Procédé selon la revendication 9, dans lequel de l'éthylène est utilisé à titre de seul comonomère.

11. Procédé selon l'une quelconque des revendications 1 à 10, dans lequel, dans l'étape a), le rapport comonomère/propylène est situé dans la plage allant de 5 à 30 mol/kmol, de préférence de 10 à 20 mol/kmol et le rapport hydrogène/propylène est situé dans la plage allant de 0,2 à 20 mol/kmol, et, dans l'étape c), le rapport comonomère/propylène est situé dans la plage allant de 20 à 50 mol/kmol et le rapport hydrogène/propylène est situé dans la plage allant de 5,0 à 150 mol/kmol.

12. Utilisation des copolymères statistiques de propylène produits selon les revendications 1 à 11 pour la production de films.

13. Utilisation des copolymères statistiques de propylène produits selon les revendications 1 à 11 en tant que matrice pour produire des copolymères de propylène hétérophasiques souples.

14. Copolymères de propylène hétérophasiques comprenant

a) 60 à 99 % en poids du copolymère statistique de propylène préparé selon les revendications 1 à 11 à titre de phase de matrice, et
b) 1 à 40 % en poids d'une phase élastomère dispersée dans ladite matrice.

15. Procédé pour produire un copolymère hétérophasique selon la revendication 14, lequel procédé comprend

- la production d'une matrice de copolymère statistique de propylène selon les revendications 1 à 10,
- le transfert du premier produit de polymérisation en phase gazeuse, c'est-à-dire la matrice de copolymère statistique de propylène, dans un deuxième réacteur en phase gazeuse,
- la production d'un copolymère de comonomère d'éthylène et/ou d'$\alpha$-oléfine en $C_4$ à $C_{12}$/propylène (A) en présence de ladite matrice,
- éventuellement le transfert du deuxième produit de polymérisation en phase gazeuse dans un troisième réacteur en phase gazeuse,
- la production d'un autre copolymère de comonomère d'éthylène et/ou d'$\alpha$-oléfine en $C_4$ à $C_{12}$/propylène (B) en présence du deuxième produit de polymérisation en phase gazeuse,
- lesdits copolymères de comonomère d'éthylène et/ou d'$\alpha$-oléfine en $C_4$ à $C_{12}$/propylène (A) et (B) présentant des compositions identiques ou différentes,
- la récupération du copolymère de propylène hétérophasique pour un traitement ultérieur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1538167 A
- EP 1783145 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 2004029112 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- EP 0491566 A
- WO 9924478 A
- WO 9924479 A
- WO 9924503 A
- WO 0068315 A
- EP 0887379 A
- WO 9212182 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- EP 1860125 A
- EP 887379 A
- EP 887380 A
- EP 887381 A
- EP 991684 A
- US 4933149 A
- EP 684871 A
- WO 2005087361 A
- US 4578879 A
- EP 600414 A
- EP 721798 A
- WO 2007025640 A
- US 4543399 A
- EP 699213 A
- WO 9425495 A
- EP 696293 A
- WO 0105845 A
- EP 499759 A
- WO 0026258 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 9704015 A
- WO 2006022736 A
- WO 2006120187 A
- EP 1633466 A
- EP 1484343 A
- GB 1580635 A
- WO 0066640 A


### Non-patent literature cited in the description


- **GELDART ; BAYENS.** *The Design of Distributors for Gas-fluidized Beds, Powder Technology,* 1985, vol. 42
- **GELDART.** Gas Fluidization Technology. J.Wiley & Sons, 1986
- *Thermochimica Acta,* 1990, vol. 66, 53-68